# EUROPEAN PATENT APPLICATION

(11) **EP 2 484 749 A1**
(43) Date of publication of application: **08.08.2012**
(21) Application number: 11153521.7
(22) Date of filing: 07.02.2011
(51) Int. Cl.: C12M 1/18, G01N 27/447, B01L 3/00

(54) **Gel electrophoresis assay system**

(71) Applicant: Aarhus Universitet, 8000 Aarhus C (DK)
(72) Inventor: Garm, Christian, 8000 Århus C (DK); Beer, Christiane, 8000 Århus C (DK)
(74) Representative: Plougmann & Vingtoft A/S

(57) **Abstract**

The present application relates to a gel electrophoresis assay system capable of testing both adherent and non-adherent cells in parallel for different DNA damages. The gel electrophoresis assay system comprises a bottom piece (1), a packing piece (5), an electrophoresis gel anchoring piece (3) positioned in-between the packing piece (5) and the bottom piece (1), and a multi-chamber part (2) positioned on top of the packing piece (5), wherein the multi-chamber part (2) and the bottom piece (1) are fixed by mechanical fixing means (7) so as to provide liquid tight fittings between the multi-chamber part (2), the packing piece (5), the electrophoresis gel anchoring piece (3), and the bottom piece (1), and wherein the multi-chamber part (2) and the packing piece (5) are detachable from the bottom piece (1) and electrophoresis gel anchoring piece (3), respectively, during normal use.

## Description

### Technical field of the invention

The present invention relates to a gel electrophoresis assay system capable of testing both adherent and non-adherent cells in parallel for different DNA damages.

### Background of the invention

There exist numerous assays for testing the adverse effects of chemicals on cells isolated from tissues of living organisms. One method is the so-called "comet assay" (Single Cell Gel Electrophoresis assay), and is a sensitive technique for evaluation of DNA damage/repair, biomonitoring and genotoxicity testing of the individual eukaryotic cell. Adherent or suspension cells are grown in cell culture containments with or without treatment with genotoxic agents, e.g. chemicals or ionizing radiation, or test substances. Cells are harvested from the cell culture containment and mixed with low melting point agarose and transferred to a slide pre-coated with agarose. This is followed by visual analysis with staining of DNA and calculating fluorescence to determine the extent of DNA damage. This can be performed by manual scoring or automatically by imaging software.

US2006068408 discloses a modified method for determining DNA damage, wherein cells are treated with genotoxic agents and lysed. In order to simplify the comet assay, the chemical treatment of the cells and the separation method take place in the same chamber. Thus, the cells need not be trypsinated and transferred.

The cells are put into various chambers of a multi-chamber plate. The multi-chamber plate is coated with an electrophoresis gel for conducting the physical separation method. Furthermore, a microcarrier is coated on top of the electrophoresis gel to support the attachment of the adherent cells. Subsequently, the cells are treated with genotoxic agents.

According to the inventors, the method is especially suitable for adherent cells, since non-adherent cells cannot attach onto the microcarrier. The system is not designed to be reused.

### Summary of the invention

Hence, an improved system that can handle both adherent and non-adherent cells would be advantageous, and in particular a system capable of testing the cells for different DNA damages in parallel would be advantageous. Furthermore, a system where the majority of the parts are reusable would be advantageous.

Thus, one aspect of the invention relates to a A gel electrophoresis assay system comprising
- a bottom piece (1),
- a packing piece (5),
- an electrophoresis gel anchoring piece (3) positioned in-between the packing piece (5) and the bottom piece (1), and
- a multi-chamber part (2),

wherein the multi-chamber part (2) and the bottom piece (1) are fixed by mechanical fixing means (7) so as to provide liquid tight fittings between the multi-chamber part (2), the packing piece (5), the electrophoresis gel anchoring piece (3), and the bottom piece (1), and

wherein the multi-chamber part (2) and the packing piece (5) are detachable from the bottom piece (1) and electrophoresis gel anchoring piece (3), respectively, during normal use.

### Brief description of the figures

Figure 1 shows a top view of an embodiment with a multi-chamber part with a matrix of 5 X 6 individual chambers,
Figure 2 shows a side view of an embodiment with a top cap or lid mounted, and
Figure 3 shows three dimensional view of an embodiment with the multi-chamber part removed, and with a top piece mounted on the electrophoresis gel anchoring piece.

The present invention will now be described in more detail in the following, including reference to the mentioned Figures.

### Detailed description of the invention

Electrophoresis is a well-known technique for the separation of charged species by utilizing their differences in rate of migration under the influence of an electrical field. The procedure has proved invaluable for the resolution and isolation of complex biological substances such as enzymes, DNA, serums, carbohydrates, proteins, including albumin and globulins and the like.

Most analytical electrophoresis methods are based on zone electrophoresis in which a thin zone of the sample is applied to the electrophoretic medium. The electrophoretic migration of the sample components results in the formation of fractional zones which can then be examined and studied by application of standard electrophoretic practices such as fixing, staining and washing to remove buffers. Desirably, the electrophoretic media is a thin gel film coated on a suitable support, commonly glass or plastic. Such an arrangement permits the electrophoretic separation to be achieved in a minimum of time with a maximum degree of resolution.

Various hydrophilic colloids, for example, starch, agarose, and cellulose derivatives have been used in forming electrophoretic gel films, but polyacrylamide is much favoured. One reason for choosing polyacrylamide is that gels can be prepared from it having a wide range of pore sizes. This is accomplished primarily by varying the ratio of acrylamide monomer to the N,N'-methylenebisacrylamide cross-linking reagent. The resulting polyacrylamide gels provide high resolution electrophoretic separations of important biopolymers, for example, proteins and nucleic acids.

One object of the present invention is to provide an improved gel electrophoresis assay system that can handle both adherent and non-adherent cells, and test many samples at the same time in order to reduce the investigation time expenditure. Cells that have been subjected to the same potential genotoxic agent can thereby be tested for different DNA damages in the same run. This has been solved by providing the cells (which have been subjected to one or more potential genotoxic agents) to the system mixed in an electrophoresis gel as a carrier.

One aspect of the invention relates to a A gel electrophoresis assay system comprising
- a bottom piece (1),
- a packing piece (5),
- an electrophoresis gel anchoring piece (3) positioned in-between the packing piece (5) and the bottom piece (1), and
- a multi-chamber part (2),
wherein the multi-chamber part (2) and the bottom piece (1) are fixed by mechanical fixing means (7) so as to provide liquid tight fittings between the multi-chamber part (2), the packing piece (5), the electrophoresis gel anchoring piece (3), and the bottom piece (1), and
wherein the multi-chamber part (2) and the packing piece (5) are detachable from the bottom piece (1) and electrophoresis gel anchoring piece (3), respectively, during normal use.

The term "electrophoresis gel" refers to the matrix used to contain, and then separate the target molecules. In one embodiment of the present invention, the electrophoresis gel is a crosslinked polymer whose composition and porosity is chosen based on the specific weight and composition of the target molecules to be analyzed. When separating proteins or small nucleic acids (DNA, RNA, or oligonucleotides) the electrophoresis gel is preferably composed of different concentrations of acrylamide and a cross-linker, producing different sized mesh networks of polyacrylamide. When separating larger nucleic acids (greater than a few hundred bases), the preferred matrix is purified agarose. Agarose is composed of long unbranched chains of uncharged carbohydrate without cross links resulting in a gel with large pores allowing for the separation of macromolecules and macromolecular complexes.

The term "Electrophoresis" refers to the electromotive force (EMF) that is used to move the molecules through the electrophoresis gel matrix. By placing the molecules in/on the electrophoresis gel and applying an electric field, the molecules will move through the matrix at different rates, determined largely by their mass when the charge to mass ratio (Z) of all species is uniform, toward the anode if negatively charged or toward the cathode if positively charged.

The system comprises a multi-chamber part for multiple testing. The multi-chamber part can be constructed in different sizes. The construction of a multi-chamber part with 96 chambers is preferred. In other embodiments, such a multi-chamber part has eight chambers. Other sizes can also easily be produced, for example, 6, 12, 24, 48, 192 or almost any other sizes.

Another object of the present invention is to provide an improved gel electrophoresis assay system wherein the majority of the system parts are reusable. The present invention is optimized in such a way that only the piece (electrophoresis gel anchoring piece) onto which the electrophoresis gel is attached/bound is discharged after use.

The term "packing piece" is to be understood as a piece which helps join the system components together by preventing leakage or excluding contamination.

In one embodiment, the packing piece needs to be of a highly flexible material so that it can undergo elastic deformation under stress and return to its previous size without permanent deformation. Such a deformation occurs when the mechanical fixing means are locking the individual system parts together. This property secures the demand for a reusable unit. Non-limiting examples of such flexible materials are natural and synthetic rubbers or mixtures thereof. Natural rubber, also called India rubber or caoutchouc, is an elastomer (an elastic hydrocarbon polymer) that was originally derived from latex, a milky colloid produced by some plants. Natural rubber coming from latex is mostly polymerized isoprene with a small percentage of impurities in it. This limits the range of properties available to it. Also, there are limitations on the proportions of cis and trans double bonds resulting from methods of polymerizing natural latex. This also limits the range of properties available to natural rubber, although addition of sulfur and vulcanization are used to improve the properties.

Synthetic rubber is any type of artificial elastomer. An elastomer is a polymer with the property of viscoelasticity (colloquially "elasticity"), generally having notably low Young's modulus and high yield strain compared with other materials. The term, which is derived from elastic polymer, is often used interchangeably with the term rubber. Each of the monomers which link to form the polymer is usually made of carbon, hydrogen, oxygen and/or silicon. Elastomers are amorphous polymers existing above their glass transition temperature, so that considerable segmental motion is possible. At ambient temperatures rubbers are thus relatively soft (E of about 3MPa) and deformable.

Synthetic rubber can be made from the polymerization of a variety of monomers including isoprene (2-methyl-1,3-butadiene), 1,3-butadiene, chloroprene (2-chloro-1,3-butadiene), and isobutylene (methylpropene) with a small percentage of isoprene for cross-linking. These and other monomers can be mixed in various desirable proportions to be copolymerized for a wide range of physical, mechanical, and chemical properties. The monomers can be produced pure and the addition of impurities or additives can be controlled by design to give optimal properties. Polymerization of pure monomers can be better controlled to give a desired proportion of cis and trans double bonds.

In another embodiment of the present invention, the packing piece comprises one or more elastomers.

In yet another embodiment of the present invention, the packing piece is implemented as bottom part of the multi-chamber part.

In still another embodiment of the present invention, the packing piece is covering the surface of the multi-chamber part. As an example, this could be as a coating of the multi-chamber part, such as a coating comprising natural rubbers, synthetic rubbers or mixtures thereof.

By "mechanical fixing means" is understood fixing means serving to mechanically fix the multi-chamber part and the bottom piece in position relative to each other and to do so in a position to enable the packing piece to provide the described liquid tight fitting. Since the multi-chamber part and the bottom piece are detachable during normal use, the mechanical fixing means preferably allows easy engagement and disengagement, so as to allow easy assembly and disassembly of the system during normal use. There exists a large number of such mechanical fixing means allowing easy assembly and disassembly, as will be appreciated by the skilled person.

As specific examples, the mechanical fixing means may be in the form of one or more recesses and corresponding one or more protrusions arranged to engage with said recesses and to provide a locking effect upon engagement. The one or more recesses may be formed on the multi-chamber part while the one or more protrusions are formed on the bottom piece, or alternatively, the arrangement may be vice versa. Especially, such recess and protrusion engagement means may be formed monolithically with the multi-chamber part and the bottom piece, respectively, so as to save separate members to implement the mechanical fixing means. The recess(es) and protrusion(s) may be formed so as to allow direct click-lock engagement, or they may be formed to allow the two parts to slide into position while the position fixing or locking mechanism is such solutions may be formed by a separate single click-lock recess-protrusion engagement. Preferably, the mentioned click-lock engagement arrangements can be released by the user so as to allow the multi-chamber part and the bottom piece to be detached during normal use. In other variants, the mechanical fixing means may include one or more holes through either the multi-chamber part and the bottom piece and corresponding threads formed in the counterpart, so as to allow the two parts to be fixed together by one or more screws, or the like.

In carrying out electrophoresis such as for the comet assay, a suitable electrophoresis gel anchoring piece is required to prevent the gel layer from fracturing, especially during such manipulations involving fixing, staining and destaining in order to visualize the DNA separation pattern. Generally, an electrophoresis gel anchoring piece according to the present invention should include the following characteristics:
(1) Dimensional stability; (2) Thermal stability; (3) Transparency; (4) Heat conductivity; (5) Abrasion resistance and (6) Gel retention.

In one embodiment of the present invention, the electrophoresis gel anchoring piece is substantially non-porous, so as to prevent the separated molecules to move into the electrophoresis gel anchoring piece. By the term "non-porous" is to be understood a electrophoresis gel anchoring piece generally having no "openings" in which molecules having a molecular weight larger than that of water can pass. I.e. any passing molecule will have to pass by diffusion between the molecules comprising the electrophoresis gel anchoring piece, and not through pores in said electrophoresis gel anchoring piece.

In another embodiment of the present invention, the electrophoresis gel anchoring piece is electrically non-conductive, since this may interfere with the electrophoresis process.

In the context of the invention, "electrically conductive" means the ability of a material to conduct an electric current. When an electrical potential difference is placed across an electrically conductive material, its movable charges flow giving rise to an electric current. In the context of the invention "electrically non-conductive" means that a certain material does not conduct a current and that when an electrical potential difference is placed across a material there are no essential movable charges and therewith no considerable current that may flow.

In another embodiment of the present invention, the net charge of the electrophoresis gel anchoring piece is selected from the group consisting of cationic, anionic and neutral.

In another embodiment of the present invention, the electrophoresis gel anchoring piece is hydrophilic. By thus controlling the polar properties of the resin, electrophoretic supports of the invention can be fabricated so as to provide effective adhesion for a wide variety of electrophoretic gels, such as polysaccharide gels, e.g. agarose.

In embodiment of the present invention, the electrophoresis gel anchoring piece comprises a base plate.

In yet another embodiment of the present invention, the electrophoresis gel anchoring piece comprises a base plate of one or more polymeric materials.

In another embodiment of the present invention, the one or more polymeric materials are selected from the group consisting of polystyrene, polypropylene, styrene-acrylonitrile copolymer, polycarbonate, cellulose acetate propionate, cellulose acetate, butyrate, nitrileacrylonitrile-styrene terpolymer, polyacrylate, polymethacrylate, polyterephthalate and acrylonitrile-butadiene-styrene copolymer.

In still another embodiment of the present invention, the electrophoresis gel anchoring piece comprises a base plate of glass.

In the context of the invention, "glass" is an amorphous solid material, such as soda-lime glass. Glasses can be made of quite different classes of materials such as metallic alloys, ionic melts, aqueous solutions, molecular liquids, and polymers.

In yet another embodiment of the present invention, a resin is applied to at least one side of said base plate.

In another embodiment, the resin applied to the base plate comprises agarose, such as high boiling point agarose or low melting point agarose. In the context of the invention, "high boiling point agarose" has a melting point above 70 degrees Celsius, and "low boiling point agarose" has a melting point below 70 degrees Celsius.

In yet another embodiment of the present invention, the resin comprises agarose having a melting point above 65 degrees Celsius, such as in the range of 70-200 degrees Celsius, e.g. 75 degrees Celsius, such as in the range of 80-180 degrees Celsius, e.g. 85 degrees Celsius, such as in the range of 90-160 degrees Celsius, e.g. 95 degrees Celsius, such as in the range of 100-150 degrees Celsius, e.g. 105 degrees Celsius, such as in the range of 110-145 degrees Celsius, e.g. 115 degrees Celsius, such as in the range of 120-140 degrees Celsius, e.g. 130 degrees Celsius.

In another embodiment, the resin applied to the base plate comprises ethylenically unsaturated groups capable of undergoing copolymerization with acrylamide.

Natural resin is a hydrocarbon secretion of many plants. Synthetic resins are materials with a property of interest that is similar to natural plant resins.

Suitable examples of a base plate for receiving the resin layers or coatings herein include films made from polymers such as polystyrene, polypropylene, styreneacrylonitrile copolymers, polycarbonate, cellulose acetate propionate, cellulose acetate butyrate, nitrile-acrylonitrilestyrene copolymers, polyacrylate, polyterephthalate, polymethacrylate, acrylonitrilebutadiene-styrene copolymers, mixtures thereof and the like. Preferably, the base plate is a polyester type, most preferably a polyterephthalate.

The resins are conveniently obtained by replacing at least one of the active hydrogens in a resin, such as a hydrophilic resin, with a substituent having ethylenically unsaturated double bonds by which the resin is capable of reacting with a polymerizing mixture of acrylamide/N,N-methylenebisacrylamide used in producing polyacrylamide electrophoretic gels. As understood herein, "active hydrogens" are the hydrogen atoms in the functional groups: -OH, -SH, =NH, - COOH, -NHR and -NH₂, wherein R is selected from alkyl, alkenyl, alkynyl, aryl, and heteroaryl.

In theory, derivatization can be 100% provided all of the active hydrogens are replaced. Generally, derivatization will be adjusted to provide the degree of polarity needed to match that of the electrophoretic gel to promote optimum adhesion thereof to the resin layer. A low degree of derivatization leaves many free active hydrogens, thus affording a resin layer having predominately hydrophilic character; a high degree of derivatization, depending on the type and molecular dimension of the substituent, affords a resin layer that is predominantly hydrophobic. By thus controlling the polar properties of the resin as above indicated, electrophoretic supports of the invention can be fabricated, utilizing both physical and chemical bonding, to provide effective adhesion for a wide variety of electrophoretic gels.

In another embodiment of the present invention, the ethylenically unsaturated groups in the resin contains ethylenically unsaturated hydrocarbon radicals of 2 to 12 carbon atoms connected to said resin through functional linkages selected from the class consisting of -O-, -S-, -N-, -O(CO)-, -S(CO)-, and -N(CO)- linkages. The hydrocarbon may be linear, branched or cyclic. Furthermore, one or more carbon atoms of the saturated part of the unsaturated hydrocarbon may be substituted for a heteroatom selected from N, O, S, S(O)₁₋₂, Si or P. One or more carbon atoms of the unsaturated hydrocarbon may and may optionally be substituted with one or more substituents selected from the group consisting of hydroxyl, oxo, cyano, lower alkyl, lower alkoxy, lower haloalkoxy, alkylthio, halo, haloalkyl, hydroxyalkyl, nitro, alkoxycarbonyl, amino, alkylamino, alkylsulfonyl, arylsulfonyl, alkylaminosulfonyl, arylaminosulfonyl, alkylsulfonylamino, arylsulfonylamino, alkylaminofarbonyl, aryl- aminocarbonyl, alkylcarbonylamino, or arylcarbonylamino.

In still another embodiment of the present invention, the resin comprises one or more materials selected from the group consisting of polysaccharides, polyvinyl alcohols, polyvinyl pyrrolidines, polyamines, polyacrylamides, and polyacrylic acids.

In yet another embodiment of the present invention, the one or more materials are derivatized by one or more reagents selected from the group consisting of alkenyl halides, 3-halopropene, 3-halo-2-butene, 4-halo-2-hexene, allylglycidyl ether, acryloyl halide, crotonyl halide, and methacryloyl halide. The terms "halo" and "halide" refer to halogen. Halogen preferably represents chlorine, but may also be bromine, fluorine or iodine.

In one embodiment of the present invention, the one or more polysaccharides are selected from the group consisting of allylglycidylagarose, allylglycidyldextran, allylglycidylchitosan, allylglycidylcarrageenan, allylglycidylalgin, allylglycidylfurcellaran, allylglycidyllaminaran, allylglycidylgalactomannan, allylglycidyl locust bean gum, allylglycidyl guar gum, allylglycidyl cellulose, allylglycidyl carboxyrnethylcellulose and allylglycidyl hydroxypropylcellulose. The term "allylglycidyl" is to be understood as where one or more of the resin's thiol (-SH), hydroxyl (-OH) and/or amine groups (-NH₂, or -NHR) have been transformed (by chemical reaction) into -O-CH(OH)CH₂OCH₂CHCH₂, -S-CH(OH)CH₂OCH₂CHCH₂, -NH-CH(OH)CH₂OCH₂CHCH₂, -N(CH(OH)CH₂OCH₂CHCH₂)₂, -N⁺(CH(OH)CH₂OCH₂CHCH₂)₃, -NR-CH(OH)CH₂OCH₂CHCH₂, or -N⁺R(CH(OH)CH₂OCH₂CHCH₂)₂ respectively, wherein R is selected from alkyl, alkenyl, alkynyl, aryl, and heteroaryl.

In another embodiment of the present invention, the one or more polysaccharides are selected from the group consisting of allylagarose, allyldextran, allylchitosan, allylcarrageenan, allylalgin, allylfurcellaran, allyllaminaran, allylgalactomannan, allyl locust bean gum, allyl guar gum, allyl cellulose, allyl carboxyrnethylcellulose and allyl hydroxypropylcellulose. The term "allyl" is to be understood as where one or more of the resin's thiol (-SH), hydroxyl (-OH) and/or amine groups (-NH₂, or -NHR) have been transformed (by chemical reaction) into -O-CH₂CHCH₂, -S-CH₂CHCH₂, -NH-CH₂CHCH₂, -N(CH₂CHCH₂)₂, -N⁺(CH₂CHCH₂)₃, -NR-CH₂CHCH₂, -N⁺R(CH₂CHCH₂)₂ respectively, wherein R is selected from alkyl, alkenyl, alkynyl, aryl, and heteroaryl.

Alkyl group: the term "alkyl" means a saturated linear, branched or cyclic hydrocarbon group including, for example, methyl, ethyl, isopropyl, t-butyl, heptyl, dodecyl, octadecyl, amyl, 2-ethylhexyl, and the like. Preferred alkyls are lower alkyls, i.e. alkyls having 1 to 10 carbon atoms, such as 1, 2, 3, 4, 5, 6, 7 or 8 carbon atoms. A cyclic alkyl/cycloalkyl means a saturated carbocyclic compound consisting of one or two rings, of three to eight carbons per ring, which can optionally be substituted with one or two substituents selected from the group consisting of hydroxy, cyano, lower alkyl, lower alkoxy, lower haloalkoxy, alkylthio, halo, haloalkyl, hydroxyalkyl, nitro, alkoxycarbonyl, amino, alkylamino, alkylsulfonyl, arylsulfonyl, alkylaminosulfonyl, aryl- aminosulfonyl, alkylsulfonylamino, arylsulfonylamino, alkylaminocarbonyl, arylamino- carbonyl, alkylcarbonylamino and arylcarbonylamino. The alkyl group may also be understood as a heteroalkyl. A heteroalkyl is a saturated linear, branched or cyclic hydrocarbon group (including, for example, methyl, ethyl, isopropyl, t-butyl, heptyl, dodecyl, octadecyl, amyl, 2-ethylhexyl, and the like) wherein one or more carbon atoms are substituted for a heteroatom selected from N, O, S, S(O)₁₋₂, Si or P and which can optionally be substituted with one or more substituents selected from the group consisting of hydroxyl, oxo, cyano, lower alkyl, lower alkoxy, lower haloalkoxy, alkylthio, halo, haloalkyl, hydroxyalkyl, nitro, alkoxycarbonyl, amino, alkylamino, alkylsulfonyl, arylsulfonyl, alkylaminosulfonyl, arylaminosulfonyl, alkylsulfonylamino, arylsulfonylamino, alkylaminofarbonyl, aryl- aminocarbonyl, alkylcarbonylamino, or arylcarbonylamino. Heteroalkyls of the present invention may be branched or unbranched or forming a ring and may range from one (1) to fifty (50) carbon atoms in length wherin 50% or less, of said carbon atoms may be substituted for N, NH(Q-4), O, S, S(O)₁₋₂, Si, P, Cl, Br. A cyclic heteroalkyl/heterocyclyl means a saturated cyclic compound or part of a compound, consisting of one to more rings, of three to eight atoms per ring, incorporating one, two, three or four ring heteroatoms, selected from N, O or S(O)₁₋₂, and which can optionally be substituted with one or two substituents selected from the group consisting of hydroxyl, oxo, cyano, lower alkyl, lower alkoxy, lower haloalkoxy, alkylthio, halo, haloalkyl, hydroxyalkyl, nitro, alkoxycarbonyl, amino, alkylamino, alkylsulfonyl, arylsulfonyl, alkylaminosulfonyl, arylaminosulfonyl, alkylsulfonylamino, arylsulfonylamino, alkylaminofarbonyl, arylaminocarbonyl, alkylcarbonylamino, or arylcarbonylamino. Examples of common heterocyclyls of the present invention include, but are not limited to piperazine and piperidine which may thus be heterocyclyl substituents as defined herin. Such substituents may also be denoted piperazino and piperidino respectively. A further heterocyclyl of the present invention is thiophene.

If the radical (R) is an alkyl group, in which, in addition, one CH₂ group (alkoxy or oxaalkyl) may be replaced by an O atom, it may be straight-chain or branched. It preferably has 2, 3, 4, 5, 6, 7, 8, 9 or 12 carbon atoms and accordingly is preferably ethyl, propyl, butyl, pentyl, hexyl, heptyl, octyl, nonyl, decyl, ethoxy, propoxy, butoxy, pentoxy, hexyloxy, heptyloxy, octyloxy, nonyloxy or decyloxy, furthermore also undecyl, dodecyl, undecyloxy, dodecyloxy, 2-oxapropyl (=2-methoxymethyl), 2-oxabutyl (=methoxyethyl) or 3-oxabutyl (=2-ethoxymethyl), 2-, 3- or 4-oxapentyl, 2-, 3-, 4- or 5-oxahexyl, or 2-, 3-, 4-, 5- or 6-oxaheptyl.

Particular preference is given to hexyl, pentyl, butyl, n-butyl, propyl, i-propyl, methyl and ethyl, in particular propyl and pentyl; particularly preferred alkoxy groups are hexyloxy, pentoxy, n-butoxy, propoxy, i-propoxy, methoxy and ethoxy, in particular ethoxy and n-butoxy.

Preferred branched radicals are isopropyl, 2-butyl (=1-methylpropyl), isobutyl (=3-methylpropyl), tert-butyl, 2-methylbutyl, isopentyl (=3-methylbutyl), 2-methylpentyl, 3-methylpentyl, 4-methylpentyl, 2-ethylhexyl, 5-methylhexyl, 2-propylpentyl, 6-methylheptyl, 7-methyloctyl, isopropoxy, 2-methylpropoxy, 2-methylbutoxy, 3-methylbutoxy, 2-methylpentoxy, 3-methylpentoxy, 2-ethylhexyloxy, 1-methylhexyloxy, 1-methylheptyloxy, 2-oxa-3-methylbutyl and 3-oxa-4-methylpentyl.

The radical R may also be an optically active organic radical containing one or more asymmetrical carbon atoms.

Alkenyl group: the term "alkenyl" means a non-saturated linear, branched or cyclic hydrocarbon group including, for example, methylene or ethylene. Preferred alkenyls are lower alkenyls, i.e. alkenyls having 1 to 10 carbon atoms, such as 1, 2, 3, 4, 5 or 8 carbon atoms. A cyclic alkenyl/cycloalkenyl means a non-saturated carbocyclic compound consisting of one or two rings, of three to eight carbons per ring, which can optionally be substituted with one or two substituents selected from the group consisting of hydroxy, cyano, lower alkyl, lower alkoxy, lower haloalkoxy, alkylthio, halo, haloalkyl, hydroxyalkyl, nitro, alkoxycarbonyl, amino, alkylamino, alkylsulfonyl, arylsulfonyl, alkylaminosulfonyl, aryl- aminosulfonyl, alkylsulfonylamino, arylsulfonylamino, alkylaminocarbonyl, arylamino- carbonyl, alkylcarbonylamino and arylcarbonylamino. The alkenyl group may also be understood as a heteroalkenyl. A heteroalkenyl is a non-saturated linear, branched or cyclic hydrocarbon group (including, for example, methyl, ethyl, isopropyl, t-butyl, heptyl, dodecyl, octadecyl, amyl, 2-ethylhexyl, and the like) wherein one or more carbon atoms are substituted for a heteroatom selected from N, O, S, S(O)₁₋₂, Si or P and which can optionally be substituted with one or more substituents selected from the group consisting of hydroxyl, oxo, cyano, lower alkyl, lower alkoxy, lower haloalkoxy, alkylthio, halo, haloalkyl, hydroxyalkyl, nitro, alkoxycarbonyl, amino, alkylamino, alkylsulfonyl, arylsulfonyl, alkylaminosulfonyl, arylaminosulfonyl, alkylsulfonylamino, arylsulfonylamino, alkylaminofarbonyl, aryl- aminocarbonyl, alkylcarbonylamino, or arylcarbonylamino. Heteroalkenyls of the present invention may be branched or unbranched or forming a ring and may range from one (1) to fifty (50) carbon atoms in length wherein 50% or less, of said carbon atoms may be substituted for N, NH(Q-4), O, S, S(O)₁₋₂ Si, P, Cl, Br. A cyclic heteroalkenyl means a non-saturated cyclic compound or part of a compound, consisting of one or more rings, of three to eight atoms per ring, incorporating one, two, three or four ring heteroatoms, selected from N, O or S(O)₁₋₂, and which can optionally be substituted with one or two substituents selected from the group consisting of hydroxyl, oxo, cyano, lower alkyl, lower alkoxy, lower haloalkoxy, alkylthio, halo, haloalkyl, hydroxyalkyl, nitro, alkoxycarbonyl, amino, alkylamino, alkylsulfonyl, arylsulfonyl, alkylaminosulfonyl, arylaminosulfonyl, alkylsulfonylamino, arylsulfonylamino, alkylaminofarbonyl, arylaminocarbonyl, alkylcarbonylamino, or arylcarbonylamino.

Alkynyl group: the term "alkynyl" means a non-saturated linear or branched hydrocarbon group including, for example, ethynyl or propynyl. Preferred alkynyls are lower alkynyls, i.e. alkynyls having 1 to 10 carbon atoms, such as 1, 2, 3, 4, 5 or 9 carbon atoms.

Aryl represents a hydrocarbon comprising at least one aromatic ring, and may contain from 5 to 18, preferably from 6 to 14, more preferably from 6 to 10, and most preferably 6 carbon atoms. Typical aryl groups include phenyl, naphthyl, phenanthryl, anthracyl, indenyl, azulenyl, biphenylenyl, and fluorenyl groups. Particularly preferred aryl groups include phenyl, naphthyl and fluorenyl, with phenyl being most preferable. Hence, aryl represents a carbocyclic or heterocyclic aromatic radical comprising e.g. optionally substituted phenyl, naphthyl, pyridyl, thienyl, indolyl or furyl, preferably phenyl, naphthyl, pyridyl, thienyl, indolyl or furyl, and especially phenyl. Non-limiting examples of substituents are halogen, alkyl, alkenyl, alkoxy, cyano and aryl.

Heteroaryl means an aromatic cyclic compound or part of a compound having one or more rings, of four to eight atoms per ring, incorporating one, two, three or four heteroatoms (selected from nitrogen, oxygen, or sulfur) within the ring which can optionally be substituted with one or two substituents selected from the group consisting of hydroxy, cyano, lower alkyl, lower alkoxy, lower haloalkoxy, alkylthio, halo, haloalkyl, hydroxyalkyl, nitro, alkoxycarbonyl, amino, alkylamino, alkylsulfonyl, arylsulfonyl, alkylaminosulfonyl, arylaminosulfonyl, alkylsulfonylamino, arylsulfonylamino, alkylaminocarbonyl, arylaminocarbonyl, alkylcarbonlamino and arylcarbonylamino.

In one embodiment of the present invention, the one or more polysaccharides are selected from the group consisting of acryloylagarose, acryloyldextran, acryloylchitosan, acryloylcarrageenan, acryloylalgin, acryloylfurcellaran, acryloyllaminaran, acryloylgalactomannan, acryloyl locust bean gum, acryloyl guar gum, acryloyl cellulose, acryloyl carboxymethylcellulose and acryloyl hydroxypropylcellulose. The term "acryloyl" is to be understood as where one or more of the resin's thiol (-SH), hydroxyl (-OH) and/or amine groups (-NH₂, or -NHR) have been transformed (by chemical reaction) into -O-(CO)CHCH₂, -S-(CO)CHCH₂, -NH-(CO)CHCH₂, and -NR-(CO)CHCH₂ respectively, wherein R is selected from alkyl, alkenyl, alkynyl, aryl, and heteroaryl.

In yet another embodiment of the present invention, a resin is applied to at least one side of said base plate, said resin comprising reactive groups capable of reacting with the hydroxyl groups of polysaccharides such as agarose.

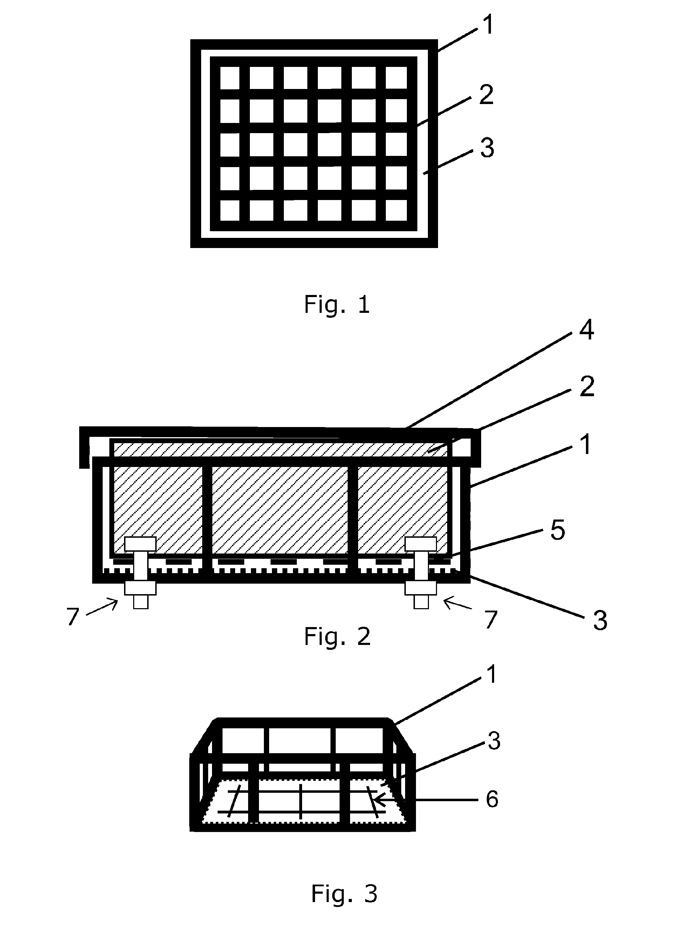

Fig. 1 illustrates a top view of an embodiment with bottom piece 1 in the form of a rectangular shaped plane plate or substrate. An electrophoresis gel anchoring piece 3 is positioned on the bottom piece 1 plate, and a multi-chamber part 2 is positioned on top of the electrophoresis gel anchoring piece 3. In this embodiment, the multi-chamber part 2 has chamber walls forming a matrix of 5 by 6 separate chambers. The shape of the chambers are shown here to be rectangular or almost quadratic, however it is to be understood that the multi-chamber part 2 may have chamber walls shaped so as to provide any desired number of separate chambers, and the shape of each chamber may in principle have any desired form. In the example, all chambers have the same or almost the same shape and size; however the multi-chamber part 2 may have chamber walls formed to provide chambers with different shape and/or size. In one embodiment, the multi-chamber part 2 comprises at least some chamber walls that are anti-reflective in the visible region of the spectrum, e.g. all of its chamber walls are anti-reflective in the visible region of the spectrum.

Fig. 2 illustrates a section of an embodiment, where a chamber wall of the multi-chamber part 2 is visible. Also a side wall of the bottom piece 1 is visible. The electrophoresis gel anchoring piece 3 is arranged on a plane bottom part of the bottom piece 1. A packing piece 5 is arranged between the multi-chamber part 2 and the electrophoresis gel anchoring piece 3. Hereby, the packing piece 5 serves to provide a liquid tight fitting between a bottom part of the multi-chamber part 2, the electrophoresis gel anchoring piece 3, and the bottom piece 1.

A cap member 4 is seen positioned on top of the multi-chamber part 2. This cap member 4 serves to close an opening of at least one of the chambers defined by the multi-chamber part 2, during use. Especially, the cap member 4 may extend so as to close openings of all individual chamber of the multi-chamber part 2. In the specific embodiment, the cap member 4 forms a lid fitting onto the rectangular box formed by the four peripheral upward-extending walls of the bottom piece 1.

Mechanical fixing means 7 serve to fix the multi-chamber part 2 and the bottom piece 1 in a detachable way. In this specific embodiment the mechanical fixing means 7 is illustrated as a simple set of screws arranged through holes in the multi-chamber part 2 and the bottom part piece 1 and tightened by means of a bolt or nut. It is understood that many other alternative fixing means could be used to fix the multi-chamber part 2 and the bottom piece 1 in a way to allow a user to separate these parts from each other during normal use. Preferably, the fixing means 7 is arranged for easy releasing, so as to facilitate the detaching process during normal use. Another simple type of fixing means is one or more clamps arranged press a bottom part of the bottom piece 1 together with a top of the cap member 4. Still further, the mechanical fixing means may be in the form of members forming a click lock function. E.g. such function can be provided by corresponding members formed on a peripheral part of the bottom piece 1 and on the cap member 4. However, it is to be understood that many other variants of the mechanical fixing means can be used, preferably providing easy engagement and disengagement to allow easy and fast assembly and disassembly of the parts during normal use.

Fig. 3 illustrates a three-dimensional view of the system of Fig. 2. The bottom piece 1 is seen with the electrophoresis gel anchoring piece 3 arranged on the plane bottom part of the bottom piece 1. The cap member 4 has been removed, and the screws and bolts have been released and the multi-chamber part 2, and the packing piece 5 are detached from the bottom piece 1 and removed. As seen, the side wall of the bottom piece 1 extends in a direction towards the electrophoresis gel anchoring piece 3, thus preventing the electrophoresis gel anchoring piece 3 from moving in a plane defined by the bottom piece 1. In this specific embodiment, the bottom piece 1 has side wall extending upwards, and providing a rectangular enclosure, thus preventing the electrophoresis gel anchoring piece 3 from sliding in a plane defined by the plane bottom part of the bottom piece 1. One or more of the chamber walls of the bottom piece 1 is liquid permeable.

A top piece 6 is seen to be positioned above the electrophoresis gel anchoring piece 3 so as to prevent the electrophoresis gel anchoring piece 3 from moving out of a plane defined by the bottom piece in this state, where the multi-chamber part and packing piece are detached from the bottom piece 1 and electrophoresis gel anchoring piece 3, respectively. The top piece 6 has a number of side walls extending in a direction towards the electrophoresis gel anchoring piece 3 so as to prevent the electrophoresis gel anchoring piece 3 from moving out of a plane defined by the bottom piece 1. Preferably, at least one of the chamber walls of the top piece 6 is liquid permeable.

It should be noted that embodiments and features described in the context of one of the aspects of the present invention also apply to the other aspects of the invention.

All patent and non-patent references cited in the present application, are hereby incorporated by reference in their entirety.

The invention will now be described in further details in the following non-limiting examples.

### Examples

### Protocol 1 for Comet Assay in chamber system

### Buffers

• 10 M NaOH
200 g NaOH to 500 ml with ddH₂O
• 0.5 M EDTA
186.1 g Na₂EDTA or 146.1 EDTA to 1 I with ddH₂O
Adjust to pH 10 with NaOH pellets or 10 M NaOH
• 1 M Tris
24.2 g Trizma base to 200 ml with ddH₂O
Adjust to pH 10 with 10 M HCl
• 5 M NaCl
292.2 g NaCl to 1 l with ddH₂O
• Lysis solution

| | *1 liter:* | *1 liter from stock solutions:* |
|---|---|---|
| 2.5 M NaCl | 146.1g NaCl | 500 ml 5M NaCl |
| 100 mM EDTA | 37.2 g Na₂EDTA | 200 ml 0.5 M EDTA, pH 10 |
| 10 mM Trizma base | 1.2 g Trizma base | 10 ml 1 M Tris-HCl, pH 10 |
| pH 10 | pH 10 | 290 ml ddH₂O |
| | | check pH |

Add 1 ml Triton X-100 per 100 ml immediately before use.

If not prepared from stock solutions: set pH to 10 with either solid NaOH, or preferably concentrated (10 M) NaOH solution. (Add 35ml of NaOH straight away to ensure that EDTA dissolves, and then add drop wise to pH 10.)
- Electrophoresis solution
   300 mM NaOH
   1 mM EDTA
   pH > 13

Prepare fresh from stock solutions.

For 1 l use: 35 ml 10 M NaOH
2 ml 0.5 M EDTA, pH 10
ddH₂O to 1 l

Measure pH and adjust to pH>13.
- Neutralizing buffer
   PBS (phosphate buffered saline)
- H₂O₂ dilutions

30% H₂O₂ =̂ 8.8M
**1M H₂O₂:** 114 µl 30% H₂O₂ + 886 µl PBS
10 mM H₂O₂: 10 µl **1M H₂O₂** + 990 µl PBS
100 µM H₂O₂:10 µl 10 mM H₂O₂ + 990 µl PBS
50 µM H₂O₂: 5 µl 10 mM H₂O₂ + 995 µl PBS

### Materials and Chemicals

Horizontal electrophoresis apparatus
Comet assay chamber system (gel electrophoresis assay system according to the present invention)

Eppendorf tubes
Low Melting Point agarose
PBS
Trypsin/EDTA
Collagenase (for tissue)
HBSS (for tissue)
NaCl
EDTA
Trizma base
HCl
NaOH
Triton X-100
Ethanol
SYBR Green Gold
H₂O₂
FPG

### Endonuclease III

### Preparations before assay start

### The day before:

- Buffer preparation:
   Prepare lysis buffer from stock solutions and store at 4°C.
   Prepare fresh electrophoresis solution and store at 4°C.

### Directly before cell preparation:

- Buffer preparation:
   Add Triton X-100 (end concentration 1%) to lysis solution.
- Liquefy 1% LMP agarose:
   1% LMP agarose in PBS is liquefied in microwave or in a 95°C heat block. Store the liquefied LMP agarose at 37°C until use.

### Cell preparation

### Cultured (monolayer) cells

- Wash cells on dish with 0.005% (0.1x) trypsin/EDTA; add fresh 0.005% (0.1x) trypsin/EDTA.
- Incubate until cells are rounding up, add equal volume of appropriate medium, and detach and resuspend the cells by pipetting. Alternatively, use a silicon rubber scraper to remove cells.
- Count the cells.
- Transfer 2x10⁵ cells to Eppendorf tube.
- Spin at 200 x g, 3 min.
- Carefully remove supernatant; disperse pellet in 100 µl PBS or proceed with chapter 6 for H₂O₂ treatment.
- Spin at 200 x g, 3 min.
- Remove as much supernatant as possible; resuspend the pellet in 100 µl PBS.
- Transfer 10 µl per sample in Eppendorf tube. Use the cells as soon as possible for the Comet Assay. Keep the cells on ice until use.

### Solid organs/tissues

- Mince 0.5 - 1.0 g tissue thoroughly on aluminium foil on ice.
- Add 10 ml of 15-30 U/ml collagenase in 1x HBSS (Ca²⁺- and Mg²⁺-free) to the tissue.
- Incubate for 10 min at 37°C with shaking.
- Centrifuge with 40 x g for 5 min at 4°C to remove undigested tissue debris.
- Transfer the supernatant into a new tube.
- Spin at 200 x g, 10 min, 4°C.
- Remove the supernatant and resuspend the cells in 1 ml PBS.
- Count the cells and transfer 2x10⁵ cells to Eppendorf tube.
- Spin at 200 x g, 3 min, 4°C.
- Remove supernatant; disperse pellet in 100 µl PBS.
- Spin at 200 x g, 3 min, 4°C.
- Remove as much supernatant as possible; resuspend the pellet in 100 µl PBS.
- Transfer 10 µl per sample in Eppendorf tube. Use the cells as soon as possible for the Comet Assay. Keep the cells on ice until use.

### Treatment with H₂O₂ as positive control (Optional)

- Dilute H₂O₂ to 0, 2.5, 5, 10, 25, 50, 100, and 200 µM for titration curve or to 25 µM for a single point positive control in PBS (30% stock H₂O₂ is 8.8 M; 50% stock H₂O₂ is 17.6 M). Keep this as working stocks for 1 week at most and then discard.
- Add 50 µl of the diluted H₂O₂ to the cells in Eppendorf tubes and incubate on ice for 10 min.
- Add 1000 µl PBS to the probes.
- Spin at 200 x g, 3 min.
- Resuspend the cell pellet in 100 µl PBS (final concentration 2x10⁴ cells / 10 µl).
- Transfer 10 µl per sample in Eppendorf tube. Use the cells as soon as possible for the Comet Assay. Keep the cells on ice until use.

Use 25 to 50 µM H₂O₂ for A549 cells.

### Embedding cells in LMP agarose

Work quickly as the agarose sets quickly at room temperature!
- Add 200 µl of 0.5% LMP agarose in PBS at 37°C to one of the 10 µl cell aliquots and mix by sucking agarose up and down (once) with pipette. (Avoid air bubbles.)
- Take the mixture (use same pipettor tip) and transfer on GelBond film.
- Leave Comet Assay chamber system in fridge or on ice for 5 min.

### Lysis

- Add 400 µl cold lysis solution with 1% Triton X-100 to each sample and incubate for 1 h at 4°C in the dark.

*Avoid direct light irradiation to prevent additional DNA damage.*

### Enzyme treatment with endonuclease III, FPG (formamidopyrimidine DNA glycosylase) (Optional)

### (endonuclease III, FPG and enzyme reaction buffer are purchased from New England BioLabs)

- Wash the wells 2x for 1 minute with 500 µl PBS.
- Wash the wells 1x for 10 minutes with 500 µl PBS
- Prepare 1 ml of 1x enzyme reaction buffer from the 10x stock buffer for each sample.
- Wash the wells 2x for 10 minutes with 400 µl enzyme buffer
- Meanwhile, prepare dilutions of enzyme in 1x enzyme reaction buffer (1:3.000 for endonuclease III and FPG from A. Collins).
- Place 150 µl of enzyme solution (or buffer alone, as control) per sample
- Cover the Comet Assay chamber system with the lid and incubate at 37°C for 60 min.

### Alkaline treatment

- Remove the enzyme solutions and wash once shortly with electrophoresis buffer
- Remove the inner chamber of the Comet Assay chamber system
- Gently place the outer grid with the GelBond film on the platform of an electrophoresis apparatus filled with cold electrophoresis solution
- Make sure that the electrophoresis apparatus is level and gels are just covered.
- Leave the slides in the electrophoresis apparatus for 40 min at 4°C.

*Avoid direct light irradiation to prevent additional DNA damage.*

### Electrophoresis

For most electrophoresis apparatus (i.e. of standard size), run at 25 V (constant voltage setting; 0.8 V/cm) and 4°C for 30 min.

Adjust the current to 300 mA by lowering or raising the buffer level above the slides.

(If there is too much electrolyte covering the slides, the current may be so high that it exceeds the maximum - so set this at a higher level than you expect to need. If necessary, i.e. if 25 V is not reached, remove some solution. Normally the current is around 300 mA but this is not crucial.)

*Avoid direct light irradiation to prevent additional DNA damage.*

### Neutralization

- Wash GelBond film for 10 min with neutralizing buffer (PBS) in a jar.
- Wash the slides for 10 min in water in a jar.

### Drying of the gels

- Place the GelBond film optional together with the outer grid in a jar with cold 70% ethanol and incubate for 30 min.
- Remove the 70% ethanol and fill the jar with 96% ethanol and leave at 4°C over night.
- Remove the 96% ethanol and dry the gels bound to the GelBond film at 37°C

### Staining

SYBR Gold DNA Stain
- Dilute 10,000x SYBR Gold DNA Stain 1:2,000 in ddH₂O.
- Cover the gels on the GelBond film with the SYBR Gold DNA Stain dilution.
- Incubate in the dark for 15 minutes at RT.
- Wash the slides for 1 min with ddH₂O and carefully remove excess ddH₂O and analyze with fluorescence microscopy.

### Analysis and quantitation

### Storage of cells for later use in Comet Assay

- Wash cells on dish with 0.005% (0.1x) trypsin/EDTA; add fresh 0.005% (0.1x) trypsin/EDTA.
- Incubate until cells are rounding up, add equal volume of appropriate medium, and detach and resuspend the cells by pipetting. Alternatively, use a silicon rubber scraper to remove cells.
- Count the cells and transfer 2-5x10⁵ cells in an Eppendorf tube.
- Pellet the cells with 200xg, remove the supernatant and resuspend the cell pellet in 250 µl FBS/10% DMSO.
- Freeze the cells at -80°C with -1°C/min (use isopropanol freezing box)
- Transfer the cells into -140°C or liquid nitrogen for long-time storage

- For use in Comet assay:
   o Thaw the cells, add 1ml PBS and pellet the cells with 200xg
   o Proceed as described in chapter 5/6

### Preparation of tissue for the Comet Assay

### (Hu et al., (2002), Free Radical Research, 36:203-209)

### Cryopreservation of tissue

- Mince 0.5 - 1.0 g tissue thoroughly on aluminium foil on ice.
- Transfer the minced tissue into a 50 ml tube.
- Add 20 ml of cold PBS/10% DMSO to the tissue.
- Freeze at -85°C (can be stored at least for 3 weeks).

### Thawing of cryopreserved tissue

- Thaw the tissue-PBS/10% DMSO-mixture in a 37°C waterbath for 2-3 min.
- Decant the fluid and transfer the tissue into a new 50 ml tube.

### Cell dissociation

- Add 10 ml of 15-30U/ml collagenase in 1x HBSS (Ca2+- and Mg2+-free) to the tissue.
- Incubate for 10 min at 37°C with shaking.
- Centrifuge with 40g for 5 min at 4°C to remove undigested tissue debris.
- Transfer the supernatant into a new tube.
- Centrifuge with 700g for 10 min at 4°C.
- Remove the supernatant and wash the cells with 1 ml 1x PBS.
- Centrifuge with 700g for 10 min at 4°C.
- Remove the supernatant and use the cells in the Comet Assay.

### DNA damage recognized by DNA repair enzymes

### Endonuclease III (E.coli)

- Cis- and trans- thymine glycol
- 5-hydroxycytosine and 5-hydroxyuracil
- 5,6-dihydrothymine
- 5-hydroxy-6-hydrothymine
- 5,6-dihydroxydihydrothymine
- 5,6-dihydrouracil
- Urea
- Alloxan
- 5-hydroxy-5-methylhydantoin
- Uracil glycol
- Methyltartronylurea
- 5-hydroxy-6-hydrouracil
- 6-hydroxy-5,6-dihydropyrimidines
- AP sites

### FPG (Formamidopyrimidine-DNA Glycosylase, E.coli)

- Open ring forms of 7-methylguanine, including 2,6-diamino-4-hydroxy-5-N-methylformamidopyrimidine and 4,6-diamino-5-amidopyrimidine, a lethal lesion.
- 8-oxoguanine, a highly mutagenic lesion and probably the most important biological substrate of Fpg.
- 5-hydroxycytosine
- 5-hydroxyuracil
- Aflatoxin-bound imidazole-ring-opened guanine
- Imidazole ring opened N-2-aminofluorene-C8-guanine

### Protocol 2 for Comet Assay in chamber system

- Cells are treated with putative genotoxic agent
- Cells are harvested and embedded in low melting point agarose (0.5% in PBS) on electrophoresis gel anchoring piece
- Add lysis solution and incubate for 1 h at 4°C
- Optional: treat the samples with DNA recognizing enzymes
- Incubate in electrophoresis solution for 40 min at 4°C

For most electrophoresis apparatus (i.e. of standard size), run at 25 V (constant voltage setting; 0.8 V/cm) and 4°C for 30 min.
- Alternative electrophoresis in 1/2x TBE buffer
- Wash samples for 10 min with neutralizing buffer (PBS)
- Wash the slides for 10 min in water
- Dry gels
- Stain with SYBR Gold 1:2000
- Wash the slides for 1 min with ddH₂O and analyze with fluorescence microscopy (Approximate fluorescence excitation/emission maxima 495/537 nm)

### Buffers

- Lysis solution
   2.5 M NaCl
   100 mM EDTA
   10 mM Trizma base
   pH 10

Add 1 ml Triton X-100 per 100 ml immediately before use.
- Electrophoresis solution
   300 mM NaOH
   1 mM EDTA
   pH >13

### Preparation of an electrophoresis gel anchoring piece

### Synthesis of derivatized polyols

### Example 1 Allylglycidylagarose

Agarose (10 grams) is dissolved in 490 ml of boiling water. The solution is maintained at 80° C. and 10 ml of 4.4 M sodium borohydride in 14 M sodium hydroxide is added with constant stirring. After ten minutes, 100 ml of a 10% sodium hydroxide solution is added, followed by the drop-wise addition of 25 ml of allylglycidyl ether over a 15-minute period. After one hour, an additional 25 ml of allylglycidyl ether is added as before and reacted for another hour. The reaction mixture is cooled to 60° C. and then neutralized by the addition of 4 M acetic acid as indicated by phenolphthalein. The solution is slowly added to 3 volumes of isopropanol, yielding a white precipitate, which is recovered by filtering through a dacron cloth. After two washings in 2 liters of 60% isopropanol, the precipitate is oven dried overnight at 60° C. and ground to a fine powder. The derivatized agarose had its initial gelling temperature (42° C.) lowered to 16° C.

### Example 2 Allylglycidyldextran

Fifty grams of dextran (MW -250,000) is dissolved in 500 ml of water and heated to 80° C. in a constant water bath. The solution is maintained at 80° C. and 15 ml of 4.4 M sodium borohydride in 14 M sodium hydroxide is added with constant stirring. After 10 minutes, 100 ml of a 25% sodium hydroxide solution is added, followed by the drop-wise addition of 50 ml of allylglycidyl ether over a 30 minute period. After two hours, an additional 25 ml of allylglycidyl ether is added and the reaction allowed continuing for another two hours. The reaction mixture is cooled to 60° C., and then neutralized by the addition of 4 M acetic as indicated by phenolphthalein. The solution is slowly added to 3 volumes of isopropanol, yielding a white gelatinous precipitate. This is cooled down to 0° C. and the alcohol decanted off. The solidified precipitate was redissolved in 500 ml of water at 60° C. and again added to 3 volumes of IPA and cooled to 0° C. The solidified precipitate was recovered after decanting and oven dried overnight at 60° C. and ground to a fine powder.

### Example 3 Coating Polyester Film with Allylglycidylagarose

A sheet of polyester film (base plate)(110 mm X 125 mm) was placed in a plasma chamber (Model #2005 T-1818 SCA, made by Dionex of Sunnyvale, Calif.) and subjected to the following conditions:
Gas: Oxygen
Pressure: 0.5 Torr
Power: 100 Watts
Time: 5 Minutes

Following plasma treatment, the film was dipped in a 0.5 aqueous solution of the allyglycidylagarose of Example 1. The coated film was then dried in an oven at 100° C. for 20 minutes.

GeBond^{®} PAG Film is another example of an electrophoresis gel anchoring piece.

## Claims

1. A gel electrophoresis assay system comprising
- a bottom piece (1),
- a packing piece (5),
- an electrophoresis gel anchoring piece (3) positioned in-between the packing piece (5) and the bottom piece (1), and
- a multi-chamber part (2) positioned on top of the packing piece (5),
wherein the multi-chamber part (2) and the bottom piece (1) are fixed by mechanical fixing means (7) so as to provide liquid tight fittings between the multi-chamber part (2), the packing piece (5), the electrophoresis gel anchoring piece (3), and the bottom piece (1), and
wherein the multi-chamber part (2) and the packing piece (5) are detachable from the bottom piece (1) and electrophoresis gel anchoring piece (3), respectively, during normal use.

2. A gel electrophoresis assay system according to claim 1, wherein the electrophoresis gel anchoring piece (3) is hydrophilic.

3. A gel electrophoresis assay system according to any one of claims 1-2, wherein the net charge of the electrophoresis gel anchoring piece (3) is selected from the group consisting of cationic, anionic and neutral.

4. A gel electrophoresis assay system according to any one of claims 1-3, wherein the electrophoresis gel anchoring piece (3) comprises a base plate.

5. A gel electrophoresis assay system according to claim 4, wherein the base plate comprises one or more polymeric materials selected from the group consisting of polystyrene, polypropylene, styrene-acrylonitrile copolymer, polycarbonate, cellulose acetate propionate, cellulose acetate, butyrate, nitrileacrylonitrile-styrene terpolymer, polyacrylate, polymethacrylate, polyterephthalate and acrylonitrile-butadiene-styrene copolymer.

6. A gel electrophoresis assay system according to any one of claims 4-5, wherein a resin is applied to at least one side of said base plate, said resin comprising agarose having a melting point above 70 degrees Celsius.

7. A gel electrophoresis assay system according to any one of claims 4-5, wherein a resin is applied to at least one side of said base plate, said resin comprising ethylenically unsaturated groups capable of undergoing copolymerization with acrylamide.

8. A gel electrophoresis assay system according to claim 7, wherein the ethylenically unsaturated groups in the resin contains ethylenically unsaturated hydrocarbon radicals of 2 to 12 carbon atoms connected to said resin through functional linkages selected from the class consisting of -O-, -S-, -N-, -O(CO)-, -S(CO)-, and -N(CO)- linkages.

9. A gel electrophoresis assay system according to any one of claims 7-8, wherein the resin comprises one or more materials selected from the group consisting of polysaccharides, polyvinyl alcohols, polyvinyl pyrrolidines, polyamines, polyacrylamides, and polyacrylic acids.

10. A gel electrophoresis assay system according to claim 9, wherein the one or more materials are derivatized by one or more reagents selected from the group consisting of alkenyl halides, 3-halopropene, 3-halo-2-butene, 4-halo-2-hexene, allylglycidyl ether, acryloyl halide, crotonyl halide, and methacryloyl halide.

11. A gel electrophoresis assay system according to claim 9, wherein the one or more polysaccharides are selected from the group consisting of allylglycidylagarose, allylglycidyldextran, allylglycidylchitosan, allylglycidylcarrageenan, allylglycidylalgin, allylglycidylfurcellaran, allylglycidyllaminaran, allylglycidylgalactomannan, allylglycidyl locust bean gum, allylglycidyl guar gum, allylglycidyl cellulose, allylglycidyl carboxyrnethylcellulose and allylglycidyl hydroxypropylcellulose.

12. A gel electrophoresis assay system according to any one of claims 1-11, wherein the packing piece (5) comprises one or more elastomers.

13. A gel electrophoresis assay system according to any one of claims 1-12, wherein the packing piece (5) is implemented as a bottom part of the multi-chamber part (2).

14. A gel electrophoresis assay system according to any one of claims 1-13, wherein the bottom piece (1) comprises one or more side walls extending in a direction towards the electrophoresis gel anchoring piece (3) so as to prevent the electrophoresis gel anchoring piece (3) from moving in a plane defined by the bottom piece (1).

15. A gel electrophoresis assay system according to any one of claims 1-14, wherein the system comprises a top piece (6) arranged for being positioned above the electrophoresis gel anchoring piece (3) so as to prevent the electrophoresis gel anchoring piece (3) from moving out of a plane defined by the bottom piece (1), when the multi-chamber part (2) and packing piece (5) are detached from the bottom piece (1) and electrophoresis gel anchoring piece (3), respectively.

16. A gel electrophoresis assay system according to claim 15, wherein the top piece (6) having one or more side walls extending in a direction towards the electrophoresis gel anchoring piece (3) so as to prevent the electrophoresis gel anchoring piece (3) from moving out of a plane defined by the bottom piece (1) when the multi-chamber part (2) and packing piece (5) are detached from the bottom piece (1) and electrophoresis gel anchoring piece (3), respectively.
